Europäisches Patentamt

European Patent Office

Office européen des brevets

(19)

(11) Numéro de publication : **0 052 534**
**B1**

# (12) FASCICULE DE BREVET EUROPÉEN

(45) Date de publication du fascicule du brevet :
**13.03.85**

(51) Int. Cl.⁴ : **F 16 K   1/22**

(21) Numéro de dépôt : **81401562.4**

(22) Date de dépôt : **09.10.81**

(54) **Vanne papillon.**

(30) Priorité : **19.11.80 FR 8024582**

(43) Date de publication de la demande :
**26.05.82 Bulletin 82/21**

(45) Mention de la délivrance du brevet :
**13.03.85 Bulletin 85/11**

(84) Etats contractants désignés :
**BE CH DE IT LI NL**

(56) Documents cités :
**CH-A-    480 577**
**DE-B- 1 042 996**
**FR-A- 1 255 873**
**FR-A- 2 038 438**
**FR-E-      91 003**
**GB-A- 1 216 533**

(73) Titulaire : **OMNIBREV HOLDING AG**
**Hofstrasse 1, Postfach 144**
**CH-6301 Zug (CH)**

(72) Inventeur : **Gachot, Jean**
**26 bis, avenue de Paris**
**F-95230 Soisy sous Montmorency (FR)**

(74) Mandataire : **Bouju, André**
**38 Avenue de la Grande Armée**
**F-75017 Paris (FR)**

EP 0 052 534 B1

Jouve, 18, rue St-Denis, 75001 Paris, France

## Description

La présente invention concerne une vanne papillon perfectionnée pour canalisations, notamment destinées à transporter un fluide sous haute pression ou à température élevée.

La vanne papillon connue par exemple, selon le FR-A-2 038 438 comporte un corps percé d'un conduit cylindrique dans lequel est monté rotativement un papillon obturateur. L'axe de rotation de ce papillon est perpendiculaire à l'axe du conduit. De plus, ce papillon est déporté latéralement par rapport à son axe de rotation. Le corps de cette vanne porte un joint annulaire d'étanchéité faisant saillie à l'intérieur du conduit. Le papillon comporte sur sa périphérie une portée annulaire destinée à prendre appui sur le joint d'étanchéité en position d'obturation de la vanne. La portée annulaire du papillon est une partie de surface sphérique dont l'axe est situé sensiblement à l'intersection de l'axe de rotation du papillon et de l'axe du conduit.

Le joint d'étanchéité de telles vannes est la plupart du temps réalisé en polytétrafluoréthylène, matière qui résiste à des températures élevées et qui présente des propriétés élastiques dans un domaine limité de contrainte mécanique.

Ce joint en polytétrafluoréthylène présente une surface interne d'étanchéité tronconique qui est sensiblement tangente à la portée annulaire sphérique du papillon dans la position d'obturation.

Dans cette position, l'étanchéité est réalisée par appui élastique de la portée annulaire du papillon contre la surface tronconique du joint. La force d'appui de la portée annulaire du papillon sur le joint tend à augmenter lorsque l'on force la rotation du papillon dans le sens de l'obturation. Lorsqu'on force trop dans ce sens, le polytétrafluoréthylène du joint se déforme irréversiblement par fluage. On risque ainsi de détériorer ce joint qui cesse alors d'être étanche.

Certaines vannes papillons comprennent à l'extérieur de leur corps une butée qui en principe, limite le déplacement du levier de manœuvre du papillon au-delà d'une certaine course angulaire. Toutefois, cette butée pour être efficace devrait être montée avec une extrême précision, ce qui dans la pratique est impossible à réaliser. De plus, il peut arriver qu'après démontage de la vanne, le levier soit remonté d'une manière défectueuse et que dans ce cas, la butée soit rendue inefficace.

Le but de la présente invention est de remédier aux inconvénients précités, en supprimant tout risque de détérioration du joint d'une vanne papillon en cas de manœuvre accidentelle du papillon, au-delà de sa position normale d'obturation.

La vanne papillon visée par l'invention comporte un corps percé d'un conduit et un papillon obturateur monté rotativement dans ce conduit, suivant un axe perpendiculaire à l'axe du conduit, le corps portant un joint annulaire d'étanchéité faisant saillie à l'intérieur du conduit et le papillon comportant sur sa périphérie une portée annulaire destinée à prendre appui sur le joint d'étanchéité, en position d'obturation du papillon, la portée annulaire du papillon étant une portion de surface sphérique dont l'axe est situé sensiblement à l'intersection de l'axe de rotation du papillon avec l'axe du conduit.

Suivant l'invention, cette vanne est caractérisée en ce que le papillon porte une butée destinée à prendre appui sur une surface intérieure de la vanne pour empêcher la rotation du papillon au-delà de sa position normale de fermeture.

Des modes particuliers de réalisation de l'invention apparaissent dans les revendications dépendantes.

La position de cette butée sur le papillon par rapport au corps de la vanne, est définie une fois pour toute lors de la construction de la vanne. Ainsi, cette position ne risque pas d'être modifiée lors des montages et remontages successifs de la vanne.

Le fait que cette butée soit mise en place sur le papillon est particulièrement judicieux, car une telle position n'entraîne aucune complication dans la réalisation du papillon ni aucune gêne pour l'écoulement du fluide à l'intérieur du conduit de la vanne, contrairement à ce qui serait le cas si la butée était disposée ailleurs, par exemple dans le conduit du corps de vanne.

Selon une version avantageuse de l'invention, dans le cas où le papillon est déporté latéralement par rapport à son axe de rotation, la butée est ménagée sur la face du papillon opposée à son axe de rotation, cette butée faisant saillie par rapport à la sphère sur laquelle est située la portion sphérique constituant la portée annulaire du papillon.

Du fait de cette saillie, la butée vient nécessairement en contact avec une surface interne de la vanne qui précède le joint d'étanchéité.

D'autres particularités et avantages de l'invention apparaîtront encore dans la description qui va suivre.

Aux dessins annexés, donnés à titre d'exemples non limitatifs :

la figure 1 est une vue en élévation d'une vanne papillon conforme à l'invention, suivant l'axe du conduit ménagé dans le corps de cette vanne,

la figure 2 est une vue de dessus de la vanne,

la figure 3 est une vue en élévation et en coupe partielle suivant le plan III-III de la figure 1,

la figure 4 est une vue en coupe suivant le plan IV-IV de la figure 3.

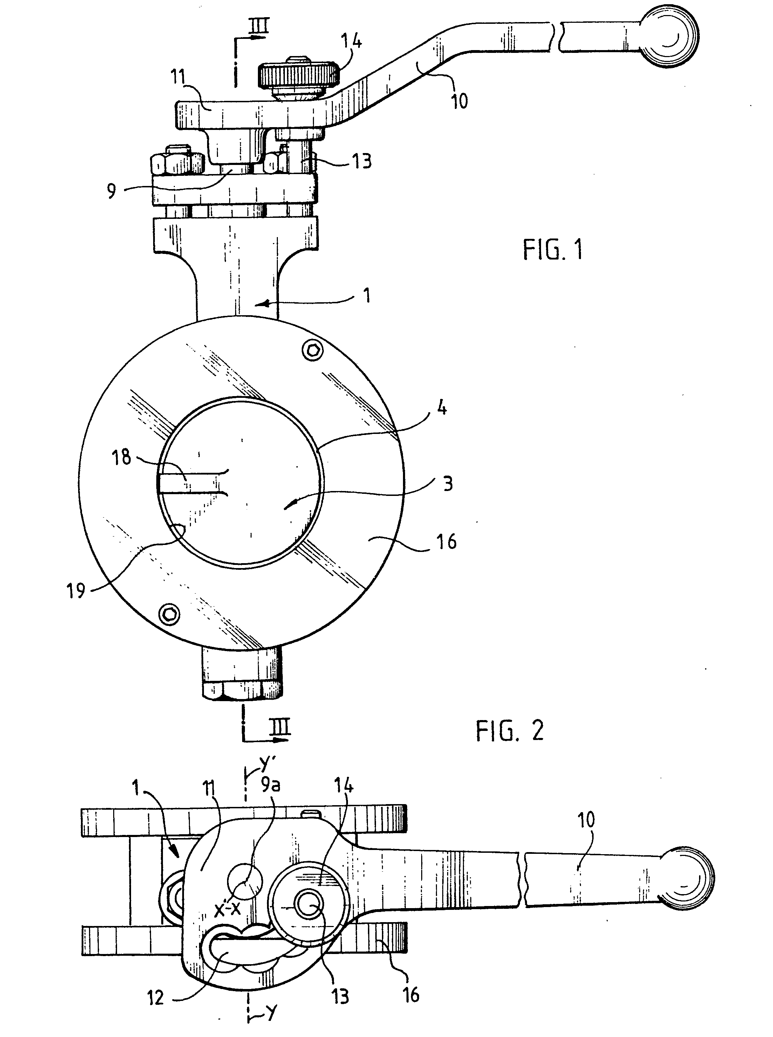

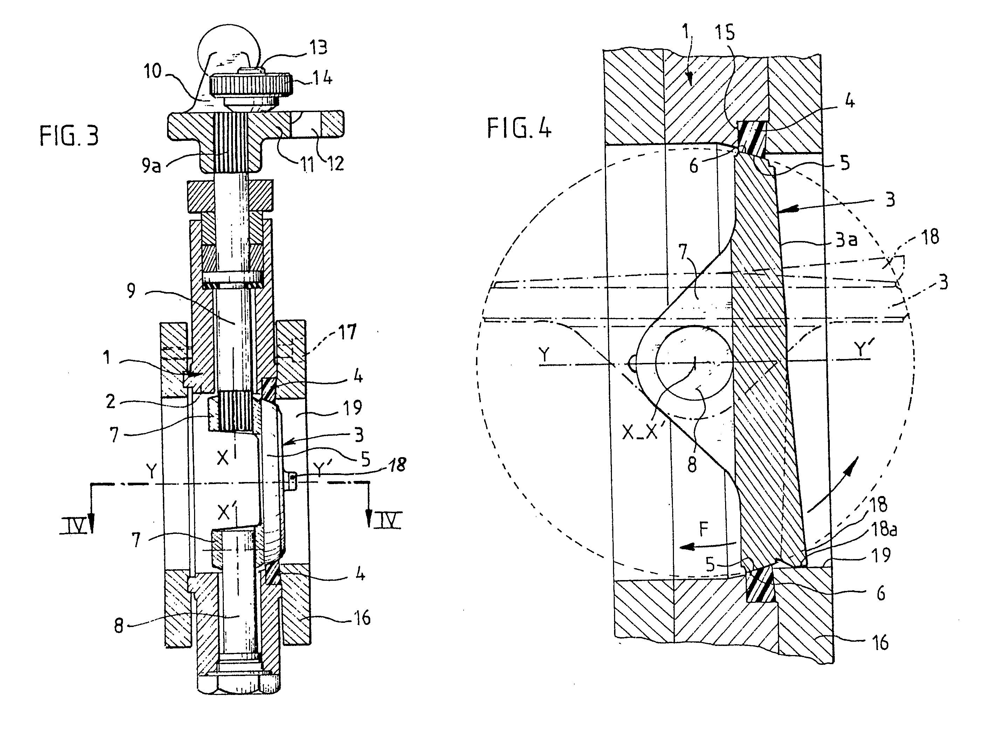

Dans la réalisation représentée sur les figures annexées, la vanne papillon comporte un corps 1 percé d'un conduit sensiblement cylindrique 2 destiné à être raccordé à des canalisations extérieures non représentées. Ce corps 1 renferme un papillon obturateur 3 qui est monté rotativement dans le conduit 2 suivant un axe X-X' perpendiculaire à l'axe Y-Y' du conduit 2 (voir figure 2). Le corps 1 porte un joint annulaire d'étanchéité 4 faisant saillie à l'intérieur du conduit 2. Le papillon 3 comporte sur sa périphérie une portée annulaire 5 prenant appui sur la surface d'étanchéité tronconique 6 du joint 4, en position d'obturation du papillon, comme indiqué sur les figures 3 et 4, cette surface servant de siège.

La portée annulaire 5 du papillon 3 est une portion de surface sphérique dont le centre est situé sensiblement à l'intersection de l'axe de rotation X-X' du papillon 3 et de l'axe Y-Y' du conduit 2.

Dans l'exemple représenté, le papillon 3 est fixé au moyen de deux oreilles 7 à deux tiges 8, 9 montées en rotation dans le corps 1 suivant l'axe X-X'. Le papillon 3 est ainsi déporté par rapport à son axe de rotation.

L'extrémité de la tige 9 est reliée à un levier de commande 10. Ce levier 10 comporte à son extrémité adjacente à la tige 9 un flasque 11 qui présente une ouverture 12 qui s'étend suivant un arc de cercle centré sur la tige 9 (voir figure 2). Dans cette ouverture 12, est engagé un goujon 13 fixé au corps 1, sur lequel est vissé un écrou 14 permettant de bloquer le levier 10 en position d'ouverture totale ou partielle ou de fermeture (comme indiqué sur les figures 1 et 2).

Dans la réalisation représentée, le joint annulaire 4 est en polytétrafluoréthylène et il est logé entre un épaulement annulaire 15 du corps 1 et une bague extérieure 16 (voir figures 3 et 4) serrée contre ce corps 1 suivant l'axe Y-Y' du conduit 2 au moyen de vis 17.

Conformément à l'invention, le papillon 3 porte une butée 18 qui prend appui sur la surface interne 19 de la bague 16 lorsque le papillon 3 est en position d'obturation complète, comme indiqué sur les figures 1, 3 et 4. Cette butée 18 empêche ainsi la rotation du papillon 3 au-delà de sa position normale d'obturation, c'est-à-dire dans le sens de la flèche F indiquée sur la figure 4.

Cette butée 18 est ménagée sur la face 3a du papillon 3 qui est opposée à son axe de rotation X-X'. De plus, cette butée fait saillie par rapport à la sphère S (représentée en pointillé sur la figure 4) sur laquelle est située la portée annulaire 6 du joint 4. Par ailleurs, cette butée 18 est située à 90° de l'axe de rotation X-X' du papillon 3. Elle est constituée d'autre part par un bossage allongé s'étendant radialement sur la face 3a du papillon 3, selon un profil aérodynamique.

Le bossage constituant la butée 18 est réalisé par moulage ou forgeage en même temps que l'ensemble du papillon, l'état de surface de la face 3a et du bossage de la butée 18 pouvant rester à l'état brut de fonderie, ou de forgeage. Seule l'extrémité 18a de la butée 18, destinée à prendre appui sur la surface interne 19 de la bague 16, nécessite une éventuelle rectification pour que l'appui précité corresponde précisément à la position d'obturation complète du papillon 3, l'engagement des parties 18 et 19 étant progressif.

Les effets techniques et les avantages de la butée 18 sont les suivants :

Grâce à cette butée 18, on empêche la rotation du papillon 3 dans le sens de la flèche F (voir figure 4) au-delà de la position d'obturation complète du papillon 3. On évite ainsi la détérioration du joint 4. En effet, en l'absence d'une telle butée il serait possible de forcer la fermeture du papillon au-delà de la position d'obturation normale indiquée sur la figure 4 et on risquerait alors de soumettre la surface tronconique 6 du joint 4 à des efforts dépassant la limite d'élasticité admissible pour le polytétrafluoréthylène, de sorte qu'il en résulterait une déformation permanente par fluage de la surface de ce joint. Ainsi, ce joint ne serait plus efficace et cesserait d'être étanche.

A cet égard, la butée constituée par le goujon 13 engagé dans l'ouverture arquée 12 du levier de commande 10 est inefficace, car les positions angulaires du levier 10, de cette butée par rapport au papillon 3 et sa position d'obturation normale ne peuvent être obtenues avec une grande précision et d'une manière reproductible, lors d'une fabrication en série. De plus, ces positions peuvent être modifiées accidentellement, en cas d'erreur de montage de la tige ou après démontage et remontage de la vanne.

La disposition de la butée 18 sur la face 3a du papillon 3 est particulièrement judicieuse, car celle-ci ne complique nullement la construction du papillon. En effet, cette butée peut être réalisée par moulage en même temps que le papillon et son état de surface ne nécessite aucun soin particulier. De plus, dans la position précitée, la butée 18 ne gêne nullement l'écoulement du fluide à l'intérieur du conduit 2. En effet, lorsque le papillon 3 se trouve en position d'ouverture complète, comme indiqué en trait mixte sur la figure 4, la butée 18 est orientée parallèlement à la direction d'écoulement du fluide et ne constitue ainsi aucun obstacle notable pour ce dernier.

Par ailleurs, du fait que la butée 18 soit moulée en même temps que le papillon 3, elle ne risque pas de se détacher de la vanne et causer ainsi des dégâts à cette dernière ou à un autre organe situé en aval de la vanne.

L'invention peut s'appliquer à des vannes papillon munies de joints en un matériau autre que le polytétrafluoréthylène et susceptibles d'être détériorés lorsque le papillon est tourné par mégarde au-delà de sa position de fermeture normale.

D'autre part, la butée pourrait éventuellement être munie d'un organe de réglage de la position de fin de course, tel qu'une vis à très faible pas et munie d'un écrou de blocage en position.

Alternativement, la partie active de la butée pourrait être munie d'un patin amortisseur par exemple en polytétrafluoréthylène.

On pourrait encore prévoir une contre-butée éventuellement réglable dans le corps de la bague 16 pour coopérer avec la butée 18.

**Revendications**

1. Vanne papillon comportant un corps (1) percé d'un conduit (2) et un papillon obturateur (3) monté rotativement dans ce conduit, suivant un axe (X-X') perpendiculaire à l'axe (Y-Y') du conduit, le corps (1) portant un joint annulaire (4) d'étanchéité faisant saillie à l'intérieur du conduit (2) et le papillon (3) comportant sur sa périphérie une portée annulaire (5) destinée à prendre appui sur le joint d'étanchéité (4) en position d'obturation du papillon, la portée annulaire du papillon étant une portion de surface sphérique dont l'axe est situé sensiblement à l'intersection de l'axe de rotation du papillon et de l'axe du conduit, caractérisée en ce que le papillon (3) porte une butée (18) destinée à prendre appui sur une surface interne (19) de la vanne pour empêcher la rotation du papillon au-delà de sa position normale de fermeture.

2. Vanne papillon conforme à la revendication 1, le papillon (3) étant déporté latéralement par rapport à son axe de rotation (X-X'), caractérisée en ce que la butée (18) est ménagée sur la face (3a) du papillon opposée à son axe de rotation (X-X'), cette butée (18) faisant saillie par rapport à la sphère (S) sur laquelle est située la portion sphérique constituant la portée annulaire (5) du papillon (3).

3. Vanne papillon conforme à l'une quelconque des revendications 1 ou 2, le joint (4) étant logé entre un épaulement annulaire (15) du corps (1) et une bague (16) serrée contre ce corps, suivant l'axe (Y-Y') du conduit (2), caractérisée en ce que les positions relatives de la butée (18) et de la bague (16) sont telles que cette butée prend appui sur la surface interne (19) de cette bague, lorsque le papillon (3) est en position d'obturation complète.

4. Vanne papillon conforme à l'une quelconque des revendications 1 à 3, caractérisée en ce que le joint annulaire d'étanchéité (4) est à base de polytétrafluoréthylène et présente une surface d'étanchéité (6) tronconique qui est sensiblement tangente à la portée annulaire sphérique (5) du papillon (3) dans la position d'obturation.

5. Vanne papillon conforme à l'une quelconque des revendications 1 à 4, caractérisée en ce que la butée (18) est située à 90° de l'axe de rotation (X-X') du papillon (3).

6. Vanne papillon conforme à l'une quelconque des revendications 1 à 5, caractérisée en ce que la butée (18) est constituée par un bossage allongé s'étendant radialement sur la face (3a) du papillon (3).

7. Vanne papillon conforme à l'une quelconque des revendications 1 à 6, caractérisée en ce que la butée (18) est réalisée par moulage en même temps que le papillon (3).

## Claims

1. A butterfly valve comprising a valve body (1) pierced by a passageway and a butterfly valve closure means (3) mounted for rotation within said passageway about an axis (X-X') located at right angles to the axis (Y-Y') of the passageway, the valve body (1) carrying an annular seal (4) which projects within the interior of said passageway (2), an annular bearing surface (5) being formed at the periphery of the closure means (3) and intended to bear on the seal (4) in the closed position of said closure means, the annular bearing surface of the closure means being a portion of spherical surface, the axis of which is located substantially at the intersection of the axis of rotation of the closure means and the axis of the passageway, characterised in that the closure means (3) includes a stop (18) which is intended to bear on an internal surface (19) of the valve in order to prevent rotation of the closure means beyond the normal position of closure of said means.

2. A butterfly valve according to claim 1, the closure means (3) being displaced laterally with respect to its axis (X-X') of rotation, characterised in that the stop (18) is formed on that face (3a) of the closure means which is remote from its axis (X-X') of a rotation, and said stop (18) forms a projection with respect to the sphere (5) on which is located the spherical portion constituting the annular bearing surface (5) of said closure means (3).

3. A butterfly valve according to claim 1 or claim 2, the seal (4) being housed between an annular shoulder (15) of the valve body (1) and a ring (16) applied against said body, along with the axis (Y-Y') of the passageway (2), characterised in that the relative positions of the stop (18) and of the ring (16) are such that said stop bears on the internal surface (19) of said ring when the closure means (3) is in the fully closed position.

4. A butterfly valve according to any one of claims 1 to 3 characterised in that the annular seal (4) has a base of polytetrafluoroethylene and has a frusto-conical sealing surface (6) which is substantially tangent to the spherical annular bearing surface (5) of the closure means (3) in the closed position.

5. A butterfly valve according to any one of claims 1 to 4 characterised in that the stop (18) is located at an angle of 90° with respect to the axis (X-X') of rotation of the closure means (3).

6. A butterfly valve according to any one of claims 1 to 5 characterised in that the stop (18) is constituted by an elongated boss which extends radially on said face (3a) of the closure means (3).

7. A butterfly valve according to any one of claims 1 to 6 characterised in that the stop (18) is formed by molding at the same time as the closure means (3).

## Ansprüche

1. Klappenschieber mit einem von einer Leitung (2) durchdrungenen Körper und einer Verschlußklappe (3), die in dieser Leitung drehbar um eine Achse (X-X') gelagert ist, die zu der Achse (Y-Y') der Leitung senkrecht ist, wobei der Körper (1) eine Ringdichtung (4) umfaßt, die in das Innere der Leitung (2) vorsteht, während die Klappe (3) an ihrem Umfang eine ringförmige Anlagefläche (5) aufweist, die dazu bestimmt ist, sich auf der Dichtung (4) abzustützen, wenn die Klappe in der Verschlußstellung ist, und wobei die ringförmige Anlagefläche der Klappe ein Teil einer Kugeloberfläche ist, deren Achse im wesentlichen durch den Schnitt der Rotationsachse der Klappe mit der Achse der Leitung geht, dadurch gekennzeichnet, daß die Klappe (3) einen Anschlag (18) trägt, der dazu bestimmt ist, sich auf einer Innenoberfläche (19) des Schiebers abzustützen, um eine Drehung der Klappe über ihre normale Verschlußstellung hinaus zu verhindern.

2. Klappenschieber nach Anspruch 1, bei welchem die Klappe (3) seitlich in bezug auf ihre Rotationsachse (X-X') versetzt ist, dadurch gekennzeichnet, daß der Anschlag (18) an derjenigen Fläche (3a) der Klappe angebracht ist, die von ihrer Rotationsachse (X-X') abgewandt ist, wobei dieser Anschlag (18) in bezug auf die Kugel (S) vorspringt, auf der sich der kugelförmige Teil befindet, welcher die ringförmige Anlagefläche (5) der Klappe (3) bildet.

3. Klappenschieber nach einem der Ansprüche 1 und 2, bei welchem die Dichtung (4) zwischen einer Ringschulter (15) des Körpers (1) und einem gegen diesen Körper in Richtung der Achse (Y-Y') der Leitung (2) gespannten Ring (16) angeordnet ist, dadurch gekennzeichnet, daß die relative Lage des Anschlages (18) und des Ringes (16) derart gewählt ist, daß dieser Anschlag sich auf der Innenoberfläche (19) dieses Ringes abstützt, wenn die Klappe (3) in der Stellung für vollständigen Verschluß ist.

4. Klappenschieber nach einem der Ansprüche 1 bis 3, dadurch gekennzeichnet, daß die Ringdichtung (4) auf Polytetrafluoräthylen-Basis ausgebildet ist und eine kegelstumpfförmige Dichtfläche (6) aufweist, die in der Verschlußstellung im. wesentlichen die ringförmige Anlagefläche (5) der Klappe (3) tangiert.

5. Klappenschieber nach einem der Ansprüche 1 bis 4, dadurch gekennzeichnet, daß der Anschlag (18) unter 90° zur Rotationsachse (X-X') der Klappe (3) angeordnet ist.

6. Klappenschieber nach einem der Ansprüche 1 bis 5, dadurch gekennzeichnet, daß der Anschlag (18) als gestreckte Wölbung ausgebildet ist, die sich radial auf der Oberfläche (3a) der Klappe (3) erstreckt.

7. Klappenschieber nach einem der Ansprüche 1 bis 6, dadurch gekennzeichnet, daß der Anschlag (18) gleichzeitig mit der Klappe (3) geformt ist.

FIG. 1

FIG. 2

FIG. 3

FIG. 4